# EUROPEAN PATENT APPLICATION

(11) **EP 1 396 803 A1**
(43) Date of publication of application: **10.03.2004**
(21) Application number: 02019812.3
(22) Date of filing: 05.09.2002
(51) Int. Cl.: G06F 17/60

(54) **System and method for handling a trade between execution and settlement**

(71) Applicant: DEUTSCHE BÖRSE AG, 60487 Frankfurt am Main (DE)
(72) Inventor: Kuhn, Michael c/o Deutsche Börse AG, 60487 Frankfurt am Main (DE); Haffner, Christian c/o Deutsche Börse AG, 60487 Frankfurt am Main (DE); Hentschel, Werner c/o Deutsche Börse AG, 60487 Frankfurt am Main (DE)
(74) Representative: Grünecker, Kinkeldey, Stockmair & Schwanhäusser Anwaltssozietät

(57) **Abstract**

The present intention relates to techniques for handling trades, and in particular to a data processing system for handling a trade between execution and settlement of the trade, a trade handling system for handling a trade executed at a trading location, and a data processing system and method for processing trade execution data relating to an executed trade. According to one aspect, the invention provides a data processing system for handling a trade between execution and settlement of the trade, comprising a data input unit for receiving trade execution data relating to an executed trade; a data processing unit adapted to generate settlement instructions for the executed trade based on the trade execution data; and a data output unit for outputting the generated settlement instructions.

## Description

The present intention relates to techniques for handling trades, and in particular to a data processing system for handling a trade between execution and settlement of the trade, a trade handling system for handling a trade executed at a trading location, and a data processing system and method for processing trade execution data relating to an executed trade.

### BACKGROUND OF THE INVENTION

Besides exchange floor-trading, electronic trading systems have become important trading locations. A known trading platform for processing electronic orders is Xetra (Exchange Electronic Trading), which is a distributed system whose components are connected according to the client-server principal. Some of the Xetra functionality is decentralized on the participants' installations, so called front ends, and some of it is implemented centrally on the Xetra back end of the exchange. The participants' front end installation can also be set up based on the client-server principle, and the use of a programmable interface makes the front end an open system to which any number of different participants' can be connected or added.

With electronic trading systems, all market participants have equal access to the trading platform, regardless of their geographic location. Further, trading in equities, warrants and bonds is possible on a single trading platform. It is further possible to individualize transaction requests with regard to validity and way of execution. Selection between limit and market orders takes into consideration the different demands of the market participants as to the speed of order execution.

Unlike exchange floor-trading, electronic order processing makes it possible for orders to be entered in the system and automatically matched. Matching orders in electronic trading systems bring together different participants with different interests and lead to the creation of trade executions.

Trade executions may be created at any possible trading location, electronic or other, and represent agreements between two participants to exchange goods against cash at or until a certain point in time.

Each executed trade represents the actual obligation to exchange the good against cash. A buy trade represents the obligation to receive a good and to pay cash for it. A sell trade represents the obligation to deliver a good and to receive cash for it. The obligation is fulfilled in the so-called settlement, wherein the physical ownership of the good is exchanged, and the cash is transferred.

However, for each participant an executed trade involves a certain risk between execution time and final settlement as the other participant may default. To cover this risk, the participants may require collateral from each other, which is used in case of the default.

Furthermore, as each participant may have a lot of executed trades, there are a lot of counter parties. This means multiple interfaces, communication effort and different handling of different parties or participants.

Furthermore, latest at the point of settlement, the different counter parties of a trade become visible, i.e., each participant becomes visible to the other participant of the settled trade. This is normally not desired but, instead, anonymity is requested.

Finally, the current market is characterized by a lot of different interfaces, a lot of counter parties, different processes, different systems, etc., which leads to inefficiencies in handling of executed trades between execution and settlement of the trades

### SUMMARY OF THE INVENTION

Given these problems with the prior art techniques, it is the object of the present invention to provide for a data processing system and method for handling a trade between execution and settlement of the trade independent on the integrated, product, market and settlement location.

This object is solved by the subject matter of the independent claims. Preferred embodiments are the subject matter of the dependent claims.

The present invention provides for a technique that enables to electronically capture all kind of executed trades at an exchange or over-the-counter and to electronically output settlement instructions to central settlement depositories (CSD), custodian institutions, central and correspond banks, or any market participants for further handling of the fulfillment of trade obligations or their own in-house need. It allows to receive trades and to use the same input on the one side for usage of a central counter party and/or netting facilitators regarding oiling, i.e., optimizing the number of instruction outputs to the CSDs and custodians and on the other side for the usage of the settlement participants and, if required, other market participants to process their in-house settlement.

Further on, the present invention can be implemented with a fully build in switchboard, which allows to transform each trade input as per individual user needs without having the need to produce a duplicate. It, additionally, provides further value added services to any participant.

The present invention is applicable to all types of trading locations, e.g., electronic exchanges, open outcry exchanges and over-the-counter trading platforms, and for all types of products, e.g., cash equity and bond products, derivatives, and repurchase agreements (repo, commodities like energy and electricity).

The present invention provides for a system consisting of a variety of technical interface ports to receive and send out transactions, instructions, and information. These interface ports are able to correspond with industry standards as much as possible. Where necessary, proprietary and specifically adapted interfaces are used. Within the system, there is a variety of components to process, enrich, temporarily store, supervise and transform the transactions, especially trades. Furthermore the construction of the system enables compiling, extracting, disseminating information, creating necessary instructions, and providing other value-adding services to participants.

According to an aspect of the present invention, there is provided a data processing system for handling a trade between execution and settlement of the trade, comprising a data input unit for receiving trade execution data relating to an executed trade; a data processing unit adapted to generate settlement instructions for the executed trade based on the trade execution data; and a data output unit for outputting the generated settlement instructions.

The data input unit is adapted to receive the trade execution data from a trading location comprising at least one of an electronic exchange, an open outcry exchange and an over-the-counter exchange platform.

The trade may represent any type of financial trade. The executed trade represents an agreement between two participants for exchanging a financial good comprising at least one of a cash equity, a bond product, a derivative and a repurchase agreement.

The settlement instructions comprise indications related to a transfer of at least one of funds and securities to complete an executed trade. The indications may comprise at least one of a date of transfer, a transfer location, a type of the at least one of funds and securities and a total amount of the at least one of funds and securities to be transferred.

The data processing unit may be further adapted to generate central counter party data using the trade execution data, the central counter party data identifying the data processing system as central counter party for the executed trade.

The data processing unit may comprise a trade receiving and validating component adapted to receive the trade execution data from a trade location and to validate the received trade execution data for correctness and consistency. The trade receiving and validating component may be further adapted to transform the received trade execution data into an internal data schema. The trade receiving and validating component may be further adapted to categorize the trade execution data based on trade specific information. The trade specific information comprises at least one of a product type, a trade type and participant information. The trade receiving and validating component may be further adapted to assign the executed trade to a processing set for further processing.

The data processing unit may comprise a trade and enrichment component adapted to enrich the trade execution data with additional attribute data required for further processing. The additional attribute data comprises at least one of default gross or net delivery and default blocked or released trade data.

The data processing unit may comprise a trade keeping component adapted to store the trade execution data in a database for further processing and reporting.

The data processing unit may comprise a trade maintenance component adapted to enable a participant to modify the trade execution data.

The data processing unit may comprise a gross delivery management component adapted to drive and steer the data processing system based on input of a participant. The gross delivery management component may be adapted to generate multiple trade views based on the trade execution data and participant import data on gross delivery management and default set up data. The gross delivery management component may further be adapted to disposition the executed trade for settlement. The gross delivery management component may further be adapted to transmit the trade execution data and participant input data for distribution of information and further processing.

The data processing unit may comprise a settlement netting component adapted to generate the settlement instructions.

The data processing unit may comprise a delivery component adapted to enrich trade execution data, which is received from one of a gross delivery management component and a settlement netting component, for sending via corresponding interfaces to associated settlement locations; the trade execution data received from the gross delivery management component being marked for gross processing but released and the trade execution data received from the settlement netting component being identified for further processing.

The data processing unit may comprise a cash management component adapted to track and store cash transactions created during processing of the executed trade. A cash transaction is created for one of an obligation fulfillment after settlement netting, fines and fees.

The data processing unit may comprise a risk based margining component adapted to aggregate obligations out of the executed trade and cash transactions into risk positions and to apply a risk based margining method on the risk positions for calculating margin requirements for a participant.

The data processing unit may comprise a supervision component adapted to monitor all activities of participants.

The data processing unit may comprise a participant maintenance component adapted to set up and to maintain participants. Each participant may receive default settings, at least one of which relates to which settlement account has to be used, if trades shall be processed gross or net, and if trades are to be released or blocked as default.

The data processing unit may comprise a reporting component adapted to inform participants about at least one of a current state of the executed trade, changes to the executed trade, and activities of other participants.

The data processing unit may comprise a corporate action processing component adapted to extract at least one pending trade from a database comprising a plurality of pending trades. The corporate action processing component may be further adapted to transfer data representing the at least one extracted trade to a corporate action service provider. The corporate action processing component may be further adapted to receive update information for the at least one executed trade and to update the database using the update information.

The data processing unit may comprise a collateral management component adapted to manage deposition and withdrawal of collateral for the executed trade. The collateral management component may be further adapted to automatically determine an amount of collateral required for the executed trade.

According to another aspect of the present invention, there is provided a trade handling system for handling a trade executed at a trading location, the executed trade representing an agreement for exchanging a good between two participants in the trade handling system, the good comprising at least one of a cash equity, a bond product, a derivative and a repurchase agreement. The trade handling system comprises a plurality of trade units, each trade unit being one of an electronic exchange, an open outcry exchange and an over-the-counter exchange platform; at least one data generating unit for generating trade execution data relating to an executed trade; a data processing unit adapted to receive the trade execution data, to generate settlement instructions for the executed trade based on the trade execution data, and to output the generated settlement instructions; and a plurality of fulfillment handling units, each fulfillment unit being one of a central settlement depository, a custodian institution, a central bank and a correspond bank. The data processing unit may be a data processing system as described above.

According to still another aspect of the present invention, there is provided a data processing system for processing trade execution data relating to an executed trade, comprising a participant classification unit having a plurality of properties for classifying different types of participants; a data generation unit for generating, using the trade execution data, at least two different trade views for the executed trade based on at least two properties of the plurality of properties, at least one trade view being suitable for use by a first type of participant and at least one other trade view being suitable for use by a second type of participant; and an interface unit for providing an interface with the at least one trade view, if a requesting participant is of the first type of participant, and with the at least one other trade view, if the requesting participant is of the second type of participant.

The participant classification unit, the data generation unit and the interface unit preferably build a gross delivery management component.

The plurality of properties for classifying different types of participants comprises properties for separating a clearing member, a settlement institution, a custodian and an other market participant.

A trade view suitable for a clearing member may comprise all executed trades associated with the clearing member; a trade view suitable for a settlement institution may comprise all executed trades associated with a settlement account associated with the settlement institution or a group of accounts managed by the settlement institution; a trade view suitable for a custodian may comprise all executed trades associated with a custodian account associated with the custodian or a group of accounts managed by the custodian; and a trade view suitable for an other market participant may comprise each individual executed trade reflecting transformation results at a level clearing member to clearing client.

The interface unit may be further adapted to provide an interface for enabling a participant to disposition the executed trade for settlement.

The data processing system may further comprise- a storage means for storing a multiplicity of different trade views associated with a plurality of different executed trades comprising buy and sell trades. The interface unit may be further adapted to provide an interface suitable for at least one of blocking/release of at least one executed trade, at least partially releasing a subset of the plurality of different executed trades, linking at least one buy and one sell trade, and marking at least one executed trade for gross processing.

The data processing system may further comprise a data output unit adapted for outputting data associated with a generated trade view to a subsequent data processing system for further processing of the executed trade.

According to still another aspect of the present invention, there is provided a method of processing trade execution data relating to an executed trade in a gross delivery management component of a central counter party system. The method comprises generating, using the trade execution data, at least two different trade views for the executed trade based on at least two properties of a plurality of properties for classifying different types of participants of the central counter party system, at least one trade view being suitable for use by a first type of participant and at least one other trade view being suitable for use by a second type of participant; determining a type of participant of a requesting participant; and providing an interface with the at least one trade view, if the requesting participant is of the first type of participant, and with the at least one other trade view, if the requesting participant is of the second type of participant.

According to this aspect of the present invention, the plurality of properties for classifying different types of participants also comprises properties for separating a clearing member, a settlement institution, a custodian and an other market participant. Furthermore, a trade view suitable for a clearing member may also comprise all executed trades associated with the clearing member; a trade view suitable for a settlement institution may also comprise all executed trades associated with a settlement account associated with the settlement institution or a group of accounts managed by the settlement institution; a trade view suitable for a custodian may also comprise all executed trades associated with a custodian account associated with the custodian or a group of accounts managed by the custodian; and a trade view suitable for an other market participant may also comprise each individual executed trade reflecting transformation results at a level clearing member to clearing client.

The method may further comprise providing an interface for enabling a participant to disposition the executed trade for settlement.

The method may further comprise storing a multiplicity of different trade views associated with a plurality of different executed trades comprising buy and sell trades.

The method may further comprise providing an interface suitable for at least one of blocking release of at least one executed trade, at least partially releasing a subset of the plurality of different executed trades, linking at least one buy and one sell trade, and marking at least one executed trade for gross processing.

The method may further comprise outputting data associated with a generated trade view to a subsequent data processing system for further processing of the executed trade.

The inventive data processing system and method for handling a trade between execution and settlement of the trade as a central counter party are advantageous because they are independent on the integrated, product, market and settlement location. In contrast thereto, prior art systems and methods are either product aligned, do only provide the legal frame and/or use different machines to perform an equivalent service. Accordingly, such prior art systems and methods require to have their participants connected only for a single market, multiple machines and networks and therefore are not in the process to perform and integrated services, as "one-stop shopping" by one single process nor access.

The present invention advantageously takes full benefit of the integrated central counter party service covering any kind of products, execution locations, settlement locations, custodians in the process between trading and changing legal ownership of goods. As a single process and therefore a "one-stop-access" individual trades of the same kind and participant may be consolidated and separated either in a gross or net view towards the individual needs of the participant for settlement, risk management, position keeping and reporting.

The present invention advantageously enables to optimize risk between trading locations, product types like, e.g., cash products and derivatives. Accordingly, on the one side better risk awareness and improvement of usage of collateral may be ensured and on the other side own capital requirements in the participating community may be reduced.

Furthermore, a single access to the central counter party according to the present invention will advantageously reduce IT and operating costs of the participants and streamline the settlement as well as the clearing process. A central counter party has more independency in the field of jurisdictional barriers than a central settlement depository. Therefore, with a consolidated and integrated management of trades between execution and fulfillment in the early stage of the value chain, many of these cross border barriers can be reduced.

Additionally, the present intervention allows extra added value to the participants by keeping their individual view of customer obligation but being able to fully participate in the most efficient settlement process.

The present invention advantageously allows to reduce the most given amount on settlement instruction is so required by the participants. Therefore, a participant can drive his external cost base by himself and, thus, gains full control and transparency over the total cost structure off his trades.

A further advantage of the present invention is that full trading anonymity can be guaranteed as the present invention allows to automatically produce instruction outputs on behalf the participants and also represents the counterpart to each trade.

### DESCRIPTION OF THE DRAWINGS

In the accompanying drawings, preferred embodiments of the invention are described in more detail.The drawings are not to be construed as limiting the present invention to only the illustrated and described examples of how the invention can be made and used. Further features and advantages will become apparent from the following and more particular description of the invention, as illustrated in the accompanying drawings, wherein:
FIG. 1 is a block diagram illustrating a trade handling system according to an aspect of the present invention;
FIG. 2 is a block diagram illustrating a data processing system according to another aspect of the present invention;
FIG. 3 is a block diagram illustrating the data processing unit of FIG. 2 in more detail;
FIG. 4 is a block diagram illustrating an alternative embodiment of the data processing unit of FIG. 2 in more detail;
FIG. 5 is a block diagram illustrating a data processing system according to still another aspect of the present invention; and
FIG. 6 is a flowchart illustrating a method of processing trade execution data according to still another aspect of the present invention;

### DETAILED DESCRIPTION OF THE DRAWINGS

The different aspects of the present invention will be described in the following with reference to the accompanying figure drawings, wherein like elements and structures are designated by like reference numerals.

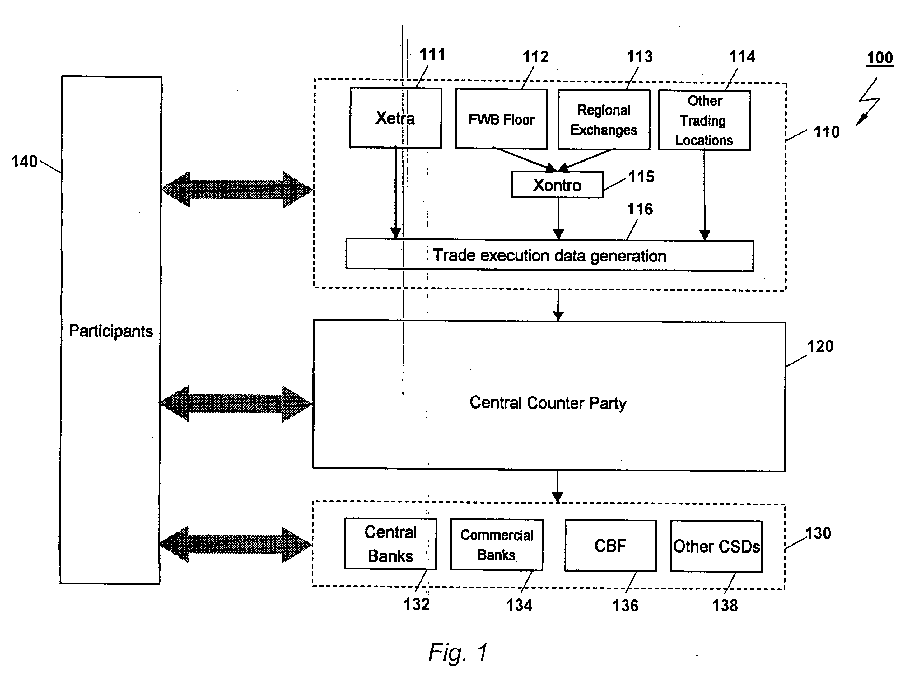

Referring now to FIG. 1, a trade handling system 100 with a trading location 110, a data processing unit 120 representing a central counter party, a fulfillment location 130 and participants 140 is shown. In the trade handling system 100, participants 140 execute trades at the trading location 110. An executed trade represents an agreement between two participants 140 for exchanging a good. The good comprises at least one of a cash equity, a bond product, a derivative and a repurchase agreement.

The trading location 110 comprises a plurality of trade units 111, 112, 113, 114 and 115, each trade unit being one of an electronic exchange, and open outcry exchange and an over-the-counter exchange platform. Trade unit 111 illustratively represents the Xetra (exchange electronic trading) platform, the electronic trading system of the Deutsche Börse AG for processing electronic orders. Trade unit 112 illustratively represents the FWB (Frankfurter Wertpapierbörse) stock exchange floor. Trade unit 113 illustratively represents regional exchanges, e.g., the Munich stock exchange floor. Trades at trade units 112 and 113 may be executed via trade unit 115, which illustratively represents the Xontro platform, an electronic trading system for trading all exchange listed national and international securities, which may support whole trading processes, i.e., electronic order routing, price-fixing, trade execution and settlement. Trade unit 114 illustratively represents any other trading location requesting for participation in the trade handling system 100.

The trading location 110 may further comprise at least one data generation unit 116 for generating trade execution data relating to an executed trade. The trade execution data may be associated with a trade which has previously been executed and for which the data processing unit 120 should ex post be implied as central counter party, or with a trade which has recently been executed and wherein the data processing unit 120 has already been designated as central counter party. The trade execution data may comprise information about new trades that are executed on the trading location 110, e.g., indications for a buy and sell side of an executed trade, trade modifications, trade updates due to aggregation on order level as well as trade cancellations.

It should be appreciated that, while data generation unit 116 has being illustrated as a separate component, each trade unit 111, 112, 113, 114 and 115 may comprise a data generation unit for generating trade execution data relating to a trade, which has being executed at the corresponding trade unit.

The fulfillment location 130 comprises a plurality of fulfillment handling units 132, 134, 136 and 138, each fulfillment handling unit being one of a central settlement depository, a custodian institution, a central bank and a correspond bank. Fulfillment handling unit 132 illustratively represents a central bank like an LZB (Landeszentralbank). Fulfillment handling unit 134 illustratively represents any commercial bank. Fulfillment handling unit 136 illustratively represents the Clearstream Banking Frankfurt (CBF). Fulfillment handling units 134 and 136 may operate as Central Security Depositories (CSDs) to settle relevant trades by executing respective debit and credit bookings on corresponding accounts involved according to delivery instructions generated by the central counter party 120. The central counter party 120 provides necessary information for the delivery process and for gross delivery management, for instance, in the form of reports and raw data. Fulfillment handling unit 138 illustratively represents other possible CSDs.

The data processing unit 120 representing the central counter party may be implemented as a central computer system platform, for instance, a Windows® NT, UNIX or OpenVMS server. However, it is to be noted that other operating systems could be used as well. Moreover, it is to be noted that other embodiments are possible where the platform is implemented using more than one separate but interconnected computer systems, e.g., one acting as fileserver, another being a database server, and yet another separate computer system acting as source data server. Furthermore, a hot-standby functionality for emergency procedures of an additional data processing system or computer should preferably be provided. Additionally, load-balancing should be enabled to allow for an efficient processing and handling of data.

The data processing unit 120 is adapted to receive generated trade execution data from the trading location 110, to generate settlement instructions for the corresponding executed trade based on the trade execution data, and to output the generated settlement instructions to the fulfillment location 130. The settlement instructions may comprise indications related to a transfer of at least one of funds and securities to complete the executed trade. The indications may comprise at least one of a date of transfer, a transfer location, a type of the at least one of funds and securities and a total amount of the at least one of funds and securities to be transferred.

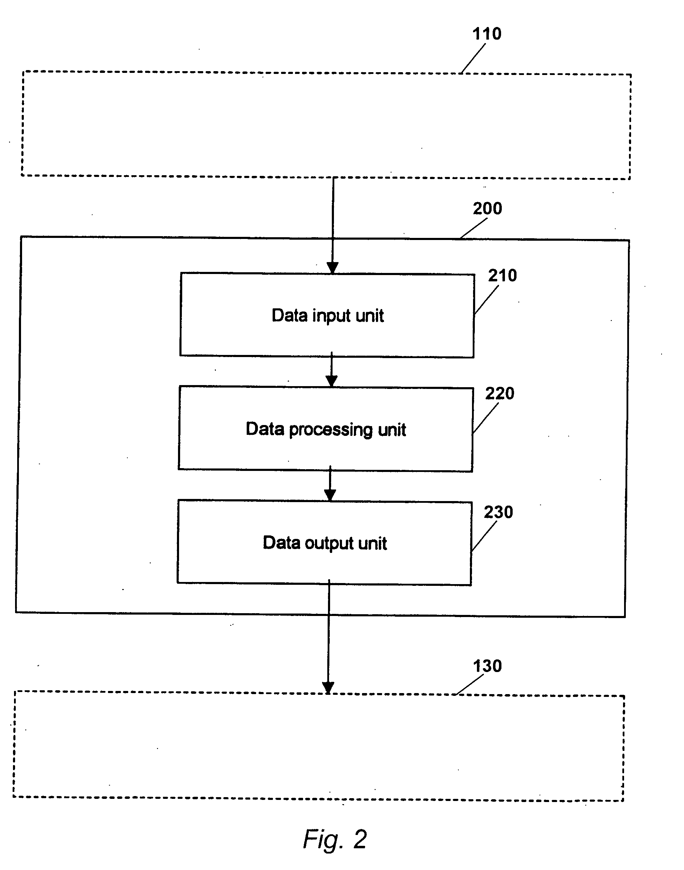

FIG. 2 shows a data processing system 200 (e.g., data processing unit 120 representing the central counter party of FIG. 1) for handling a trade between execution and settlement of the trade. Data processing system 200 comprises a data input unit 210, a data processing unit 220 and a data output unit 230.

The data input unit 210 is adapted for receiving trade execution data relating to an executed trade from a trading location, illustratively represented as trading location 110 of FIG. 1. The data processing unit 220 is adapted for generating settlement instructions for the executed trade based on the received trade execution data. The data output unit 230 is adapted for outputting the generated settlement instructions to a fulfillment location for settlement, illustratively represented as fulfillment location 130 of FIG. 1.

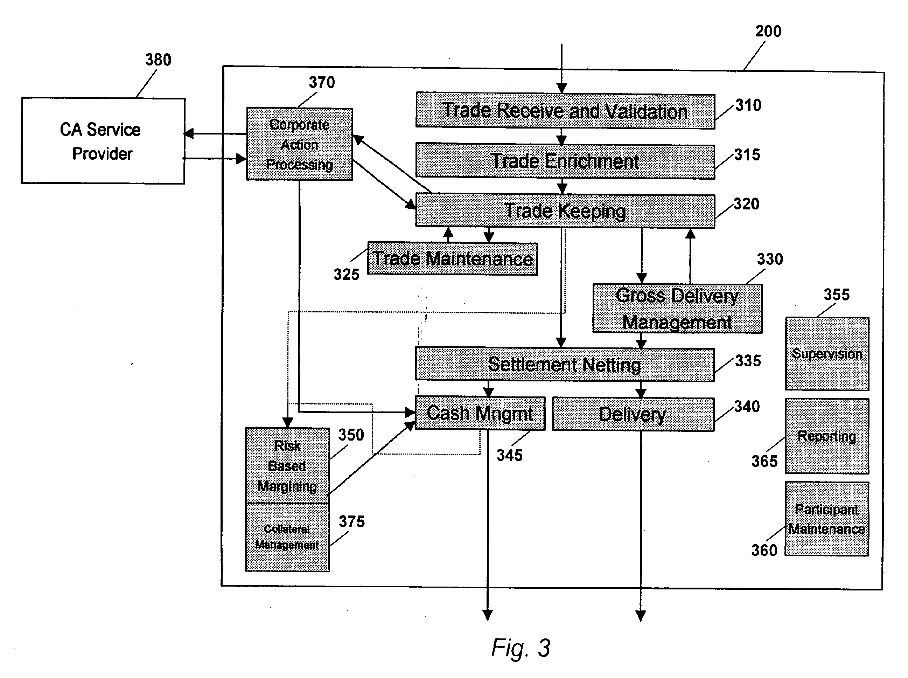

FIG. 3 illustrates the data processing unit 200 of FIG. 2 in more detail. The data processing unit 200 may comprise a trade receiving and validating component 310, a trade enrichment component 315, a trade keeping component 320, a trade maintenance component 325, a gross delivery management component 330, a settlement netting component 335, a delivery component 340, a cash management component 345, a risk-based margining component 350, a supervision component 355, a participant maintenance component 360, a reporting component 365, a corporate action processing component 370 connected to a corporate action service provider 380, and a collateral management component 375.

The trade receiving and validating component 310 is adapted to receive via interfaces trade execution data from a trading location in real-time or near time after execution. It maps the received trade execution data into an internal data schema, e.g., it takes each attribute comprised in the trade execution data and translates it into a generic central counter party logic (e.g., it translates the ID of a participant at the trading location into a central counter party ID for the corresponding participant).

The trade receiving and validating component 310 is further adapted for validating the trade execution data for correctness and consistency. It categorizes the trade executions (which product, which type of trade, which participant etc.) and assigns trades to processing sets (which clearing member etc.) for further processing.

The trade receiving and validating component 310 is in connection with the trade enrichment component 315. The received and validated trade execution data is transmitted from the trade receiving and validating component 310 to the trade enrichment component 315.

The trade enrichment component 315 is adapted to enrich the received and validated trade execution data with additional attribute data representing additional information, which is required for further processing. The additional information may be generic, e.g., accrued interest for a bond trade, premium for an option trade, or specific for the involved participants, e.g., which settlement account has to be used at the settlement location for the settlement. The enrichment is based on information, which is stored in a database of the data processing system.

The trade enrichment component 315 can be configured for the different necessities of the different trading locations. For instance, some trading locations may provide already highly enriched trades, while other trading locations just provide the core trade attributes. Furthermore, default values, which are maintained in a central participant identification database, are being added to each executed trade. Such default values may comprise, e.g., by default gross or net delivery, by default blocked or released trades. etc. Furthermore, different instrument groups may be processed differently according to pre-determined processing criteria. For instance, settlement may be scheduled with respect to the date T of trade execution, e.g., T+2 settlement processing for equities, T+3 settlement processing for bonds and/or T+n settlement processing for over-the-counter trades.

The trade enrichment component 315 is in connection with the trade keeping component 320. The enriched trade execution data is transmitted from the trade enrichment component 315 to the trade keeping component 320.

The trade keeping component 320 is adapted to store the trade execution data in a database for further processing and reporting. The database may be implemented as being part of the trade keeping component 320, as a part of the data processing unit 200 or on any external storage means, managed by the data processing unit 200. Interfaces may be provided to inquire the current state of trades stored in the database. The trade keeping component 320 is in connection with the trade maintenance component 325, the gross delivery management component 330 and the settlement netting component 335.

The trade maintenance component 325 is adapted to enable a participant to modify trade execution data relating to a particular executed trade, when it is ensured that no contractual binding trade attributes are changed. To this event, a connectivity may be provided where a trading location can inform about trade modifications done in their corresponding systems. A specific module may then update the corresponding trades in the database of the trade keeping component 320. Alternatively, participants may be enabled to directly modify trades.

The trade maintenance component 325 may comprise a module to change trade attributes, e.g., text field and/or account; a module to split trades into multiple trades for further processing; a module to merge trades into single trades for further processing; a module, which allows to transfer obligations from one participant to another one (so called give-up/ take-up); a module, which allows to transfer a historical trade to the current day for further modifications (so called historical trade transfer).

The gross delivery management component 330 is adapted to drive and steer the central counter party system, i.e. the data processing system 200. Any of the components and modules connected within the data processing unit 200 as a subordinated process are triggered by the configuration given in this component.

The gross delivery management component 330 is adapted to separate trade execution data relating to a single executed trade into multiple trade views without breaking it up. Accordingly, for each executed trade at least two different trade views are generated. On the one side a trade view from the central counter party to its fulfillment location and on the other side a trade view of the fulfillment location to its own client.

Furthermore, predetermined properties may be defined for separating different types of participants, e.g., clearing members, settlement institutions, custodians and other market participants, so that different trade views may be generated for different types of participants. Clearing Members may want to access information summarizing all trades under their ID, e.g., comprising surplus, gross and netted trades including a cash offset and in parallel as a listing of all individual trades which might have a different setting. Settlement Institutions may want to access information relating to their settlement account or a group of accounts managed by them. Custodians may have similar demands like settlement Institutions but like to reform the information provided to their own needs. Other market participants who are authorized and somehow involved in the process of a trade may be interested to access a gross view of each individual trade and therefore want to access information relating to trades reflecting the transformation results at the level clearing member to clearing client.

Accordingly, a trade view suitable for a clearing member may comprise all executed trades associated with the clearing member, a trade view suitable for a settlement institution may comprise all executed trades associated with a settlement account associated with the settlement institution or a group of accounts managed by the settlement institution, a trade view suitable for a custodian may comprise all executed trades associated with a custodian account associated with the custodian or a group of accounts managed by the custodian, and a trade view suitable for an other market participant may comprise each individual executed trade reflecting transformation results at a level clearing member to clearing client.

Furthermore, the gross delivery management component 330 may be adapted to provide interfaces to enable participants to disposition an actual trade for settlement. This disposition is done on the trade level with in the gross delivery management component 330. To perform disposition of an executed trade, the following modules may be provided within the gross delivery management component 330:

### - Block Release, Partial Release of Trades Module:

A single trade can be blocked or released. Blocked sell trades will be excluded from settlement on the level fulfillment location - participant. This might in certain cases exclude the settlement on the level central counter party - fulfillment location as well. Released sell trades can be included in settlement on the level fulfillment location - participant and central counter party - fulfillment location. For partially released trades this is applicable on the corresponding released and blocked quantities.

### - Link of Trades Module:

Buy and sell trades can be linked either manually one by one or by reference in each of the trades. Linked sell trades are settled on the level fulfillment location - participant if the associated buy trades are settled on this level.

### - Mark Trades for Gross Processing Module:

A default process of a gross or net flag in the trade enrichment can be overwritten for any buy or sell trades. As a continuing process this will influence the risk-based margining component 350 and will drive the netting process within the delivery component 340.

### - Entire Block / Entire Release of Trades Module:

Entirely blocked buy or sell trades are excluded from settlement on the level central counter party - fulfillment location, whereas an entire release revokes an entire block.

With all these main trade related modules plus some other ones, the gross delivery management component 330 is able to generate different trade views and to distribute corresponding information for further processing to any one of the subordinated components as, e.g., the delivery component 340, a position keeping component, the risk-based margining component 350, etc. Accordingly, each executed trade which has been transformed in the gross delivery management component 330 to a net trade is being sent to the settlement netting component 335, which is in connection with the gross delivery management component 330.

The settlement netting component 335 is adapted to generate settlement instructions. Therefore, the settlement netting component 335 is adapted to check trade execution data for each executed trade for a clearing member ID, settlement institution ID and product ISIN and further to move all such executed trades, regardless if buy or sell, into a single container. In this container are several layers such, that, e.g., the oldest executed trade is moved to a bottom layer, followed at a next layer with all blocked trades and added on the top layer by all released trades. Furthermore, an overbalancing part may be moved to the delivery component 340 for further processing. If a overbalancing part should contain a blocked trade, then the settlement netting component 335 cuts of the block part and moves that part back to the container.

The settlement netting component 335 is in connection with the gross delivery management component 330, the cash management component 345 and the delivery component 340.

The delivery component 340 receives from the gross delivery management component 330 all executed trades marked for gross processing, which are released, and from the settlement netting component 335 all executed trades which are identified for further processing. All trades arriving at this component are enriched in order to send instructions via interfaces to corresponding settlement locations. The settlement locations confirm the actual settlements and the corresponding trades are marked as settled, e.g., that the corresponding obligations are fulfilled and the data processing unit 200 takes over this status in the gross delivery management component 330. The status of each trade is continuously tracked and updated.

After each delivery cycle of the settlement location this process is performed and before each such cycle the settlement netting component 335, by interfacing with the gross delivery management component 330, sends the latest overbalance in a corresponding netting container. If required, the delivery component 340 will intra-day amend instructions to the setttement location.

In case of late obligation fulfillment by a participant, interest of delays and fines are automatically calculated by using the incorporated module which is interfacing with the fee and fine component. Accordingly, the cash management component 345 may be alarmed and advised to collect and release a debited or credited account.

The cash management component 345 is adapted to track and store cash transactions created during processing of an executed trade. During the trade processing, several types of cash obligations are created, e.g., for the obligation fulfillment after settlement netting, for fines and fees, etc. These obligations are represented by cash transactions, which are tracked and stored in a database by the cash management component 345.

For the actual settlement of these cash transactions, the cash management component 345 nets them to a single instruction per bank account. The information about the bank account is being received by a transfer of member data between the cash management component 345 and a participant master database. Thereafter, the data processing unit 200 ensures that an instruction is being sent to the corresponding bank for external payment.

The data processing unit 200 is able to read back for the payment if the amount has not been paid and would immediately initiate an alarm process.

The risk-based margining component 350 is in connection with the trade keeping component 320 and the cash management component 345. The risk-based management component 350 is adapted to aggregate all the obligations out of executed trades and cash transactions into so called risk positions. On the risk positions a risk-based margining method is applied, which calculates so called margin requirements for each participant. Furthermore, the risk positions may be calculated on the basis of pre-determined risk-groups.

For this process, the data processing unit 220 may store all relevant trades into various containers, which are independent from any containers used in other components. These containers are automatically established and designed for correct margin control in the central counter party system as per the predefined profile filed in the participant master database. The margin requirements have to be covered by collateral.

The corporate action processing component 370 is in connection with the cash management component 345, the trade keeping component 320 and an external corporate action service provider 380. The corporate action processing component 370 is adapted to extract all pending executed trades out of the database via the trade keeping component 320, regardless if they are pending on the level central counter party - fulfillment location or only on the level fulfillment location - participant. It transfers the extracted trades to the corporate action service provider 380.

The corporate action processing component 370 is further adapted to receive update information per trade and either overrides existing trades or generates new trades.

The corporate action processing component 370 processes this information or trades by either updating all relevant components or proceeding as a trade received from a trading location.

The collateral management component 375 is in connection with the risk-based margining component 350 and is adapted to provide interfaces for participants to deposit and withdraw collateral. The collateral value is automatically calculated. At certain points in time, e.g., the end of day, the margin requirements are compared against the collateral value. In case of insufficient collateral, the collateral management component 375 automatically initiates that cash is debited or, in case of a surplus in cash, credited, at the clearing member's corresponding bank account.

The supervision component 355 is adapted to monitor all activities of the participants, and to intervene if required. This component allows to have access to any component in the data processing unit 200 and to manually interrupt an automated process or, if the stream within a component or between different components is blocked, to "keep the wheel rolling again".

The participant maintenance component 360 can be set up and maintained in the participant database of the data processing unit 200. Each participant receives default settings indicating, e.g., which settlement account have to be used, if trades should be processed gross or net, if trades are to be released or blocked as default etc. This component is connected to almost each other component to ensure that the missing steering configuration can be added to perform the correct routing of a trade into the correct container for further processing.

The reporting component 365 is adapted to inform all involved participants about the current states of trades, changes to trades, and activities of the single components of the data processing unit 200. The participants may also be informed about overall obligations, like, e.g., margin requirements.

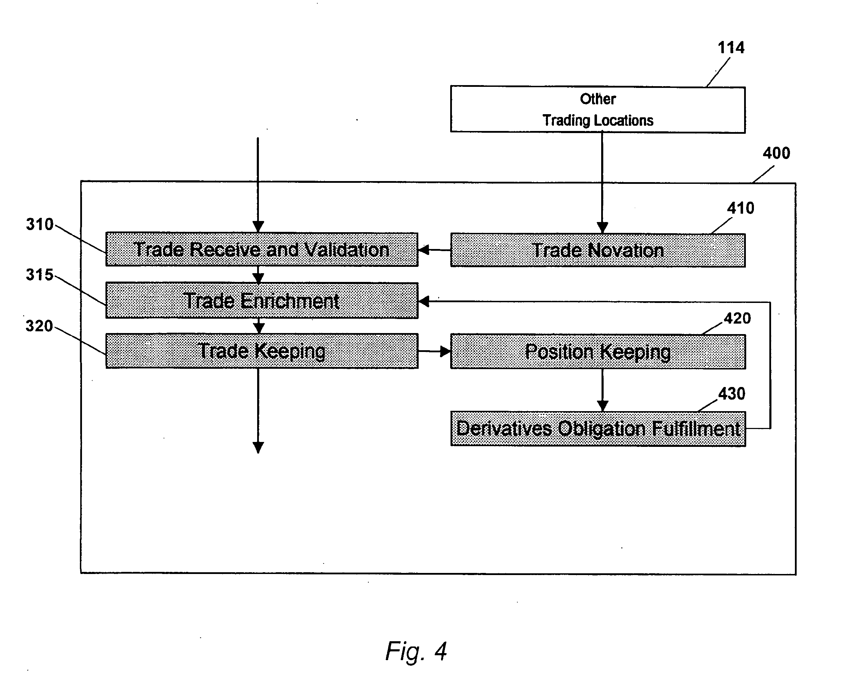

FIG. 4 illustrates a data processing unit 400 according to another aspect of the present invention. The data processing unit 400 comprises all components of the data processing unit 200 as shown in FIG. 3 and additionally a trade novation component 410, a position keeping component 420, and a derivatives obligation component 430. The trade receiving and validating component 310, the trade enrichment component 315 and the trade keeping component 320 correspond to the components illustrated in FIG. 3 and are shown, as they are in connection and interact with the additional components. However, for purposes of conciseness, the remaining components illustrated in and described with respect to FIG. 3 are not shown.

The trade novation component 410 is in connection with other trading locations, e.g., another trading location 114 of FIG. 1, and the trade receiving and validating component 310. The trade novation component 410 is used for trades, where a neutral and centralized organization may become counterpart after trade execution. This centralized organization is implemented as the data processing unit 400 and represents the central counter party as described above. Therefore, in a trade where party A buys and party B sells, the trade novation component 410 creates two trades: one trade where party A buys and the central counter party sells and another trade where the central counter party buys and B sells. For other trades, the centralized organization becomes counterpart immediately at trade execution and the trade novation component 410 is not required. Nevertheless his component may double-check any such transaction for completeness prior to any further processing within the data processing unit 400. Incomplete trades are recognized as failures and therefore would be rejected.

The position keeping component 420 is in connection with the trade keeping component 320. Currently, for certain trade types obligations are aggregated into so-called positions, which are kept until fulfillment of the obligations at both levels, central counter party - fulfillment location and fulfillment location - participant. With the introduction of the position keeping component 420 within the data processing unit 400, the technique of containers as introduced above can be further enriched and the modular technique of the gross delivery management component 330 of FIG. 3 can further be used to channel individual trades into storage. By keeping trades in a storage file until further usage for the settlement process, information formatting may be enhanced and validation may be performed.

The position keeping component 420 directly receives the trades from the trade keeping component 320 and is in a permanent interface with the gross delivery management component 330 of FIG. 3 and the risk-based margining component 350 of FIG. 3. It may further receive settlement price data by interface input from an external device.

The derivatives obligation fulfillment component 430 is in connection with the position keeping component 420. As soon as a futures and options position reaches the date of its expiration, the position keeping component 420 may automatically create trades representing the obligations to be fulfilled.

Optionally, an interface may be provided, which allows participants to exercise an option position.

The derivatives obligation fulfillment component 430 is adapted to assign corresponding (short) positions and to create trades representing the obligations to be fulfilled. These obligations are either being transported to the trade keeping component 320 via the trade enrichment component 315 and to the gross delivery management component 330 of FIG. 3 for further processing, or to the cash management component 345 of FIG. 3 for adding into a container of cash obligation, if the derivatives product is being cash settled.

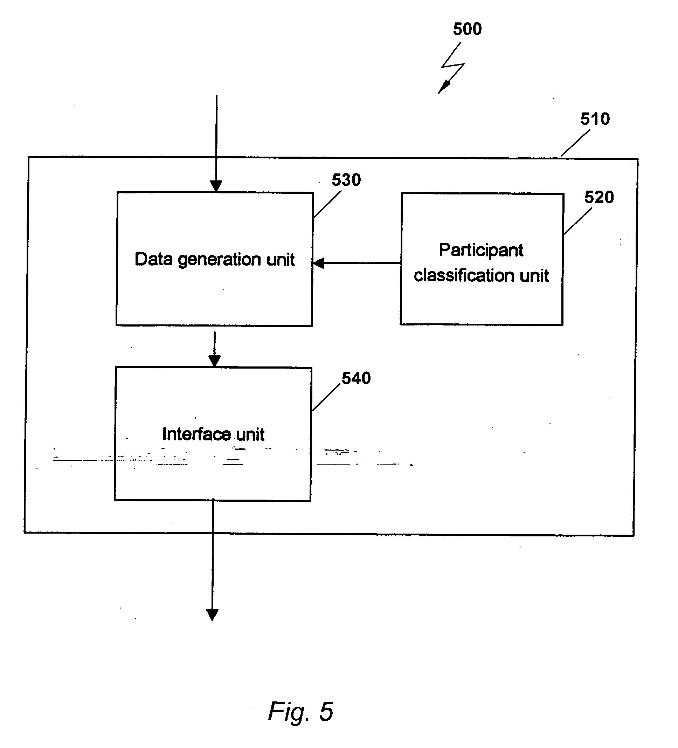

FIG. 5 illustrates a data processing system 500 for processing trade execution data relating to an executed trade according to another aspect of the present invention. The data processing system 500 illustratively represents a gross delivery management component 510, e.g., gross delivery management component 330 of FIG. 3, comprising a participant classification unit 520, a data generation unit 530 and an interface unit 540.

The participant classification unit 520 provides for a plurality of properties for classifying different types of participants. The plurality of properties for classifying different types of participants comprises properties for separating, for instance, a clearing member, a settlement institution, a custodian and an other market participant.

The data generation unit 530 is adapted for generating, using the trade execution data, at least two different trade views for the executed trade based on at least two properties of the plurality of properties, at least one trade view being suitable for use by a first type of participant and at least one other trade view being suitable for use by a second type of participant. The different trade views may be associated with a plurality of different executed trades comprising buy and sell trades.

A trade view suitable for a clearing member may comprise all executed trades associated with the clearing member; a trade view suitable for a settlement institution may comprise all executed trades associated with a settlement account associated with the settlement institution or a group of accounts managed by the settlement institution; a trade view suitable for a custodian may comprise all executed trades associated with a custodian account associated with the custodian or a group of accounts managed by the custodian; and a trade view suitable for an other market participant may comprise each individual executed trade reflecting transformation results at a level clearing member to clearing client.

The interface unit 540 is adapted to provide an interface with the at least one trade view, if a requesting participant is of the first type of participant, and with the at least one other trade view, if the requesting participant is of the second type of participant. The interface unit may be further adapted to provide an interface for enabling a participant to disposition the executed trade for settlement.

The interface unit may be further adapted to provide an interface suitable for at least one of blocking/release of at least one executed trade, at least partially releasing a subset of the plurality of different executed trades, linking at least one buy and one sell trade, and marking at least one executed trade for gross processing.

The data processing system may further comprise a data output unit adapted for outputting data associated with a generated trade view to a subsequent data processing system for further processing of the executed trade.

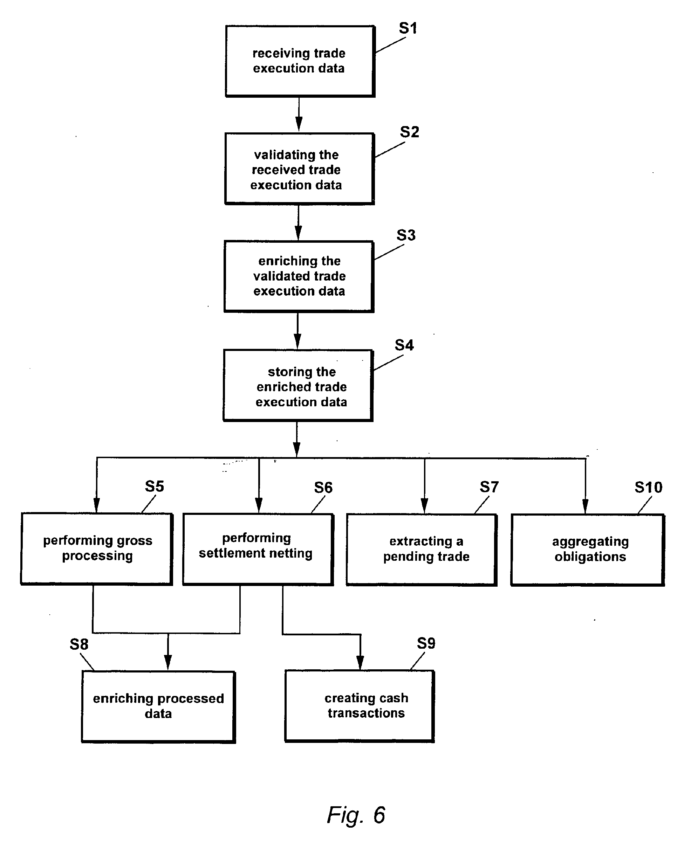

FIG. 6 illustrates an exemplary flowchart of a method of processing trade execution data in a data processing system for handling a trade between execution and settlement of the trade according to the present invention.

In a step S1, trade execution data relating to an executed trade is received. In subsequent steps, settlement instructions are generated for the executed trade based on the trade execution data, which are outputted for performing settlement.

In a step S2, the received trade execution data is validated for correctness and consistency. Step S2 may comprise transforming the received trade execution data into an internal data schema. Step S2 may further comprise categorizing the trade execution data based on trade specific information. The trade specific information comprises at least one of a product type, a trade type and participant information. Step S2 may further comprise assigning the executed trade to a processing set for further processing.

In a step S3, the received and validated trade execution data is enriched with additional attribute data required for further processing. The additional attribute data comprises at least one of default gross or net delivery and default blocked or released trade data.

In a step S4, the trade execution data is stored in a database for further processing and reporting. The stored trade execution data may be modified by a participant.

In a step S5, gross processing may be performed on the stored trade execution data, whereby at least two different trade views are generated for the executed trade based on at least two properties of a plurality of properties for classifying different types of participants, at least one trade view being suitable for use by a first type of participant and at least one other trade view being suitable for use by a second type of participant. Step S5 may comprise determining the type of a participant of a requesting participant. Step S5 may further comprise providing an interface with the at least one trade view, if the requesting participant is of the first type of participant, and with the at least one other trade view, if the requesting participant is of the second type of participant. Step S5 may further comprise providing an interface for enabling a participant to disposition the executed trade for settlement. Step S5 may further comprise storing a multiplicity of different trade views associated with a plurality of different executed trades comprising buy and sell trades. Step S5 may further comprise providing an interface suitable for at least one of blocking/release of at least one executed trade, at least partially releasing a subset of the plurality of different executed trades, linking at least one buy and one sell trade, and marking at least one executed trade for gross processing.

Alternatively, in a step S6, the stored trade execution data may be processed for settlement netting to generate corresponding settlement instructions.

Alternatively, in a step S7, at least one pending trade is extracted from a database comprising a plurality of pending trades. Step S7 may further comprise transferring data representing the at least one extracted trade to a corporate action service provider. Step S7 may further comprise receiving update information for the at least one executed trade and updating the database using the update information.

In a step S8, the trade execution data, which has been gross processed by a gross delivery management component or settlement netting processed by a settlement netting component, is enriched for sending via corresponding interfaces to associated settlement locations; wherein the trade execution data received from the gross delivery management component is marked for gross processing but released and the trade execution data received from the settlement netting component is identified for further processing.

In a step S9, cash transactions are created, tracked and stored for the trade execution data received from the settlement netting component. A cash transaction is created for one of an obligation fulfillment after settlement netting, fines and fees.

In a step S10, obligations are aggregated out of the executed trades stored in step S4 and cash transactions created is step S9 into risk positions. Step S10 may further comprise applying of a risk based margining method on the risk positions for calculating margin requirements for a participant. Step S10 may further comprise managing deposition and withdrawal of collateral for the executed trades. Step S10 may further comprise automatically determining an amount of collateral required for the executed trades.

## Claims

1. A data processing system for handling a trade between execution and settlement of the trade, comprising:
a data input unit for receiving trade execution data relating to an executed trade;
a data processing unit adapted to generate settlement instructions for the executed trade based on the trade execution data; and
a data output unit for outputting the generated settlement instructions.

2. The data processing system of claim 1, wherein the data input unit is adapted to receive the trade execution data from a trading location comprising at least one of an electronic exchange, an open outcry exchange and an over-the-counter exchange platform.

3. The data processing system of claim 1 or 2, wherein the trade is a financial trade and the executed trade is an agreement between two participants for exchanging a financial good comprising at least one of a cash equity, a bond product, a derivative and a repurchase agreement.

4. The data processing system of one of the claims 1 to 3, wherein the settlement instructions comprise indications related to a transfer of at least one of funds and securities to complete the executed trade.

5. The data processing system of claim 4, wherein the indications comprise at least one of a date of transfer, a transfer location, a type of the at least one of funds and securities and a total amount of the at least one of funds and securities to be transferred.

6. The data processing system of one of the claims 1 to 5, wherein the data processing unit is further adapted to generate central counter party data using the trade execution data, the central counter party data identifying the data processing system as central counter party for the executed trade.

7. The data processing system of one of the claims 1 to 6, wherein the data processing unit comprises:
a trade receiving and validating component adapted to receive the trade execution data from a trade location and to validate the received trade execution data for correctness and consistency.

8. The data processing system of claim 7, wherein the trade receiving and validating component is further adapted to transform the received trade execution data into an internal data schema.

9. The data processing system of claim 7 or 8, wherein the trade receiving and validating component is further adapted to categorize the trade execution data based on trade specific information.

10. The data processing system of claim 9, wherein the trade specific information comprises at least one of a product type, a trade type and participant information.

11. The data processing system of one of the claims 7 to 10, wherein the trade receiving and validating component is further adapted to assign the executed trade to a processing set for further processing.

12. The data processing system of one of the claims 1 to 11, wherein the data processing unit comprises a trade enrichment component adapted to enrich the trade execution data with additional attribute data required for further processing.

13. The data processing system of claim 12, wherein the additional attribute data comprises at least one of default gross or net delivery and default blocked or released trade data.

14. The data processing system of one of the claims 1 to 13, wherein the data processing unit comprises a trade keeping component adapted to store the trade execution data in a database for further processing and reporting.

15. The data processing system of one of the claims 1 to 14, wherein the data processing unit comprises a trade maintenance component adapted to enable a participant to modify the trade execution data.

16. The data processing system of one of the claims 1 to 15, wherein the data processing unit comprises a gross delivery management component adapted to drive and steer the data processing system based on input of a participant.

17. The data processing system of claim 16, wherein the gross delivery management component is adapted to generate multiple trade views based on the trade execution data and participant input data on gross delivery management and default set up data.

18. The data processing system of claim 16 or 17, wherein the gross delivery management component is adapted to disposition the executed trade for settlement.

19. The data processing system of one of the claims 16 to 18, wherein the gross delivery management component is adapted to transmit the trade execution data and participant input data for distribution of information and further processing.

20. The data processing system of one of the claims 1 to 19, wherein the data processing unit comprises a settlement netting component adapted to generate the settlement instructions.

21. The data processing system of one of the claims 1 to 20, wherein the data processing unit comprises a delivery component adapted to enrich trade execution data, which is received from one of a gross delivery management component and a settlement netting component, for sending via corresponding interfaces to associated settlement locations; the trade execution data received from the gross delivery management component being marked for gross processing but released and the trade execution data received from the settlement netting component being identified for further processing.

22. The data processing system of one of the claims 1 to 21, wherein the data processing unit comprises a cash management component adapted to track and store cash transactions created during processing of the executed trade.

23. The data processing system of claim 22, wherein a cash transaction is created for one of an obligation fulfillment after settlement netting, fines and fees.

24. The data processing system of one of the claims 1 to 23, wherein the data processing unit comprises a risk based margining component adapted to aggregate obligations out of the executed trade and cash transactions into risk positions and to apply a risk based margining method on the risk positions for calculating margin requirements for a participant.

25. The data processing system of one of the claims 1 to 24, wherein the data processing unit comprises a supervision component adapted to monitor all activities of participants.

26. The data processing system of one of the claims 1 to 25, wherein the data processing unit comprises a participant maintenance component adapted to set up and to maintain participants.

27. The data processing system of claim 26, wherein each participant receives default settings, at least one of which relates to which settlement account has to be used, if trades should be processed gross or net, and if trades are to be released or blocked as default.

28. The data processing system of one of the claims 1 to 27, wherein the data processing unit comprises a reporting component adapted to inform participants about at least one of a current state of the executed trade, changes to the executed trade, and activities of other participants.

29. The data processing system of one of the claims 1 to 28, wherein the data processing unit comprises a corporate action processing component adapted to extract at least one pending trade from a database comprising a plurality of pending trades.

30. The data processing system of claim 29, wherein the corporate action processing component is further adapted to transfer data representing the at least one extracted trade to a corporate action service provider.

31. The data processing system of claim 30, wherein the corporate action processing component is further adapted to receive update information for the at least one executed trade and to update the database using the update information.

32. The data processing system of one of the claims 1 to 31, wherein the data processing unit comprises a collateral management component adapted to manage deposition and withdrawal of collateral for the executed trade.

33. The data processing system of claim 32, wherein the collateral management component is further adapted to automatically determine an amount of collateral required for the executed trade.

34. A trade handling system for handling a trade executed at a trading location, the executed trade representing an agreement for exchanging a good between two participants in the trade handling system, the good comprising at least one of a cash equity, a bond product, a derivative and a repurchase agreement, the trade handling system comprising:
a plurality of trade units, each trade unit being one of an electronic exchange, an open outcry exchange and an over-the-counter exchange platform;
at least one data generating unit for generating trade execution data relating to an executed trade;
a data processing unit adapted:
- to receive the trade execution data;
- to generate settlement instructions for the executed trade based on the trade execution data; and
- to output the generated settlement instructions; and
a plurality of fulfilment handling units, each fulfilment unit being one of a central settlement depository, a custodian institution, a central bank, a correspond bank and a participant.

35. The trade handling system of claim 34, wherein the data processing unit is a data processing system according to any one of claims 1 to 33.

36. A data processing system for processing trade execution data relating to an executed trade, comprising:
a participant classification unit having a plurality of properties for classifying different types of participants;
a data generation unit for generating, using the trade execution data, at least two different trade views for the executed trade based on at least two properties of the plurality of properties, at least one trade view being suitable for use by a first type of participant and at least one other trade view being suitable for use by a second type of participant; and
an interface unit for providing an interface with the at least one trade view, if a requesting participant is of the first type of participant, and with the at least one other trade view, if the requesting participant is of the second type of participant.

37. The data processing system of claim 36, wherein the participant classification unit, the data generation unit and the interface unit build a gross delivery management component.

38. The data processing system of claim 36 or 37, wherein the plurality of properties for classifying different types of participants comprises properties for separating a clearing member, a settlement institution, a custodian and an other market participant.

39. The data processing system of claim 38, wherein a trade view suitable for a clearing member comprises all executed trades associated with the clearing member, a trade view suitable for a settlement institution comprises all executed trades associated with a settlement account associated with the settlement institution or a group of accounts managed by the settlement institution, a trade view suitable for a custodian comprises all executed trades associated with a custodian account associated with the custodian or a group of accounts managed by the custodian, and a trade view suitable for an other market participant comprises each individual executed trade reflecting transformation results at a level clearing member to clearing client.

40. The data processing system of one of the claims 36 to 39, wherein the interface unit is further adapted to provide an interface for enabling a participant to disposition the executed trade for settlement.

41. The data processing system of one of the claims 36 to 40, further comprising a storage means for storing a multiplicity of different trade views associated with a plurality of different executed trades comprising buy and sell trades.

42. The data processing system of claim 41, wherein the interface unit is further adapted to provide an interface suitable for at least one of blocking/release of at least one executed trade, at least partially releasing a subset of the plurality of different executed trades, linking at least one buy and one sell trade, and marking at least one executed trade for gross processing.

43. The data processing system of one of the claims 36 to 42, further comprising a data output unit adapted for outputting data associated with a generated trade view to a subsequent data processing system for further processing of the executed trade.

44. A method of processing trade execution data relating to an executed trade in a gross delivery management component of a central counter party system, the method comprising:
generating, using the trade execution data, at least two different trade views for the executed trade based on at least two properties of a plurality of properties for classifying different types of participants of the central counter party system, at least one trade view being suitable for use by a first type of participant and at least one other trade view being suitable for use by a second type of participant;
determining a type of participant of a requesting participant; and
providing an interface with the at least one trade view, if the requesting participant is of the first type of participant, and with the at least one other trade view, if the requesting participant is of the second type of participant.

45. The method of claim 44, wherein the plurality of properties for classifying different types of participants comprises properties for separating a clearing member, a settlement institution, a custodian and an other market participant.

46. The method of claim 45, wherein a trade view suitable for a clearing member comprises all executed trades associated with the clearing member, a trade view suitable for a settlement institution comprises all executed trades associated with a settlement account associated with the settlement institution or a group of accounts managed by the settlement institution, a trade view suitable for a custodian comprises all executed trades associated with a custodian account associated with the custodian or a group of accounts managed by the custodian, and a trade view suitable for an other market participant comprises each individual executed trade reflecting transformation results at a level clearing member to clearing client.

47. The method of one of the claims 44 to 46, further comprising providing an interface for enabling a participant to disposition the executed trade for settlement.

48. The method of one of the claims 44 to 46, further comprising storing a multiplicity of different trade views associated with a plurality of different executed trades comprising buy and sell trades.

49. The method of claim 48, further comprising providing an interface suitable for at least one of blocking/release of at least one executed trade, at least partially releasing a subset of the plurality of different executed trades, linking at least one buy and one sell trade, and marking at least one executed trade for gross processing.

50. The method of one of the claims 44 to 49, further comprising outputting data associated with a generated trade view to a subsequent data processing system for further processing of the executed trade.
